# EUROPEAN PATENT SPECIFICATION

(11) **EP 2 826 269 B1**
(45) Date of publication and mention of the grant of the patent: **09.03.2016**
(21) Application number: 13712093.7
(22) Date of filing: 13.03.2013
(51) Int. Cl.: H04W 12/06, H04L 29/06, H04W 48/18, H04W 88/06

(54) **MOBILE DEVICE ACTIVATION VIA DYNAMICALLY SELECTED ACCESS NETWORK**
AKTIVIERUNG EINER MOBILEN VORRICHTUNG ÜBER EIN DYNAMISCH AUSGEWÄHLTES ZUGANGSNETZ
ACTIVATION D'UN DISPOSITIF MOBILE VIA UN RÉSEAU D'ACCÈS SÉLECTIONNÉ DE FAÇON DYNAMIQUE

(30) Priority: 14.03.2012 US 201261610910 P; 23.01.2013 US 201313748152
(43) Date of publication of application: 21.01.2015
(73) Proprietor: Headwater Partners I LLC, Redwood Shores CA 94065 (US)
(72) Inventor: RALEIGH, Gregory, G., Redwood Shores, CA 94065 (US); LAVINE, James, Redwood Shores, CA 94065 (US)
(74) Representative: Eisenführ Speiser
(86) International application number: PCT/US2013/031093
(87) International publication number: WO 2013/138532

(56) References cited:
- WO-A2-2007/124279
- US-A1- 2003 171 112

## Description

### CROSS-REFERENCE TO RELATED APPLICATIONS

### TECHNICAL FIELD

The disclosure herein relates to mobile device activation.

### BRIEF DESCRIPTION OF THE DRAWINGS

The disclosure herein is illustrated by way of example, and not by way of limitation, in the figures of the accompanying drawings and in which like reference numerals refer to similar elements and in which:
Figure 1 illustrates an embodiment of a wireless device having a device credential 101, user-interface (UI) agent, and activation agent capable of communicating with an authorization server element, service controller element, and activation server element on a core network over two different wireless access networks;
Figure 2 presents a flow diagram illustrating an example of a process of selecting an activation service plan selection in accordance with some embodiments, including an embodiment according Figure 1; and
Figure 3 illustrates a generalized embodiment of a computing device 300 that may be used to implement the wireless device and various network elements (e.g., authentication servers, activation servers, etc.) described in reference to Figures 1 and 2.

### DETAILED DESCRIPTION

In some embodiments, wireless mobile devices "ship hot" where their device credential is stored and recognized by the network as a device that is not yet associated with a paid service plan, and the mobile device is granted limited permissions to at least access an activation server over the wireless access network. An example is given in WO 2007/124279 describing a method by a wireless device, sending a message to a network element over a first wireless network, including a first device credential, and determining that the wireless device is not authorized to connect to the network element over the first network. This allows for the wireless access network to provide the communications necessary for the activation server to support an automated on-device service plan offer to a device user after the device is turned on so that the device user can select a paid service plan right on the device user interface (UI). This on-device activation sequence is provided by a device service plan activation agent that automatically connects via the wireless access network to the activation server to assist in providing the device user with a service plan selection message after the device is turned on.

In some embodiments, there is a cost to maintaining a device as a "ships hot" device if it does not convert (e.g., the user does not convert it) to a paid user service plan after a certain period of time. Examples of a cost to maintain a device as "ships hot" include a payment that is required to maintain the device in an activated device database and tying up (e.g., reserving) a mobile phone number (or another credential) for a device that has not logged in to sign up for a paid service plan activation. In such embodiments it may be advantageous to remove a device from a "ships hot" activation status and assign it instead to an "unactivated" activation status, but this status change may remove the option of using the wireless access network to provide the communications necessary for the activation server to support an automated on-device service plan offer to a device user after the device is turned on, thus compromising or denying the device user's ability to select a paid service plan through the device UI (e.g., without a call to customer support). In such cases it is advantageous for a device agent (e.g., a service plan activation agent) to detect/determine that the wireless access network is not available and, in response to that determination, automatically implement an alternative activation message sequence that instructs the device user to first connect the device using an alternative access method, and then, after the device user connects the device with the alternative access method, the device service plan activation agent automatically connects via the wireless access network to the activation server to assist in providing the device user with a service plan selection message after the device is turned on.

In some embodiments, a process for pre-activating devices on a wireless network comprises:
- receiving, through a network interface, one or more device credentials and storing the one or more credentials in a pre-service-plan-selection activation database,
- reading the credentials in the database,
- provisioning the network elements responsible for controlling service plan policies to allow access to at least an activation server for each device associated with a device credential in the database,
- recognizing a device access attempt when the device attempts to communicate via the wireless access network, determining that the device credential is in .the database, allowing (e.g., routing, directing, etc.) at least a portion of device data traffic to the activation server, the activation server comprising a network element configured to interact with the device agent to obtain a device user service plan option choice and activate the service plan option by causing the network apparatus managing service plan policies to provision the policies corresponding to the chosen service plan selection option,
- assisting in presenting a service plan selection message through a device UI,
- obtaining a user service plan selection choice from the service plan activation agent, and
- provisioning the network elements responsible for controlling service plan policies to implement the service plan permissions associated with the user service plan selection choice.

In some embodiments, a process for pre-activating devices on a network comprises:
- accepting through an interface one or more device credentials from an end-user device,
- comparing the one or more device credentials with an approved list of credentials,
- entering at least one of the one or more device credentials in a pre-service-plan-selection database,
- reading the credentials in the database, and
- provisioning the network elements responsible for controlling service plan policies to allow access to at least an activation server for each device associated with a device credential in the database.

In some embodiments, a network system for pre-activating devices on a network comprises, one or more network elements (e.g., an activation server) configured to:
- receive a device service plan activation agent request to activate a device credentials,
- receive the device credential from the device service plan activation agent,
- compare the device credential with an approved list of credentials to authorize the device activation agent to activate a service plan,
- assist in presenting a service plan selection message through a device UI,
- obtain a user service plan selection choice from the service plan activation agent,
- enter the device credential in a database of activated devices, and
- provision the wireless access network elements responsible for controlling service plan policies to implement the service plan permissions associated with the user service plan selection choice.

In some embodiments, the activation server is incorporated into an HLR (Home Location Register), an HSS (Home Subscriber Server), an SGSN (Serving GPRS Support Node), a GGSN (Gateway GPRS Support Node), a PDSN (Packet Data Serving Node), a Home Agent, a Foreign Agent, a AAA (Authentication, Authorization and Accounting) server, a web server, or another authorization element operated by the wireless access network provider, a partner of the wireless access network provider (e.g., retail partner, OEM partner, etc.), or an MVNO.

In some embodiments, the device credential is an IMSI (International Mobile Subscriber Identity), an MSISDN (Mobile Station International Subscriber Directory Number), an MDN (Mobile Directory Number), a MIN (Mobile Identification Number), an ESN (Electronic Serial Number), an MEID (Mobile Equipment Identifier), an IMEI (International Mobile Equipment Identity), a MAC address, an IP address, a shared secret, a username, a password, a Network Access Identifier (NAI), or any other identifier that uniquely identifies the device.

In some embodiments, a service plan activation agent is included on the device (e.g., instantiated by one or more programmed processors) to assist in activating a wireless access network service plan for the device. In some embodiments, the service plan activation agent is configured to automatically communicate with an activation server over the wireless access network after the device is turned on, the communication comprising registering the device with the activation server and assisting in implementing an activation sequence to obtain a set of service plan policy capabilities for the device. In some embodiments, at least a portion of the assisting in implementing an activation sequence comprises causing a service plan selection message to be displayed on a user interface of the device and obtaining a user service plan selection choice from the UI in response to the user service plan selection message. In some embodiments, the user service plan selection message comprises a message requesting a user acknowledgement that a service plan charge will be billed to the user for wireless access services, and the user service plan selection choice constitutes such acknowledgement. In some embodiments, the user service plan selection message comprises an offer for the user to sign up for a service plan selection, and the user service plan selection choice comprises a user authorization to proceed with the service plan selection and associated service billing. In some embodiments, the user service plan selection message comprises an offer for the user to sign up for a service plan selection, and the user service plan selection choice comprises a user input containing payment information specifying how the user would like to pay for the service plan, including possibly financial information from the user for a payment vehicle. In some embodiments, the user service plan selection message comprises an offer of more than one service plan option for the user to sign up for a service plan selection, and the user service plan selection choice comprises a selection from the multitude of choices.

In some embodiments, communicating with the activation server and registering the device comprises establishing a secure service control link with the activation server, providing a device credential to the activation server and receiving authorization to communicate with the activation server.

In some embodiments, presenting information (e.g., a message) through the user interface comprises retrieving at least a portion of the message from pre-stored information on the device. In some embodiments, presenting information (e.g., a message) through the user interface comprises obtaining at least a portion of the message from the activation server and displaying it to the UI. In some embodiments, presenting information (e.g., a message) through the user interface comprises causing a web page, wireless access point (WAP) page, or portal page to be displayed on the device UI.

In some embodiments, prior to the device agent completing the process of communicating with the activation server, registering a device credential, and assisting in the activation sequence, the device wireless access service activation is de-activated, or the device wireless access permission is revoked so that the device is not able to gain access over the wireless access network. In some embodiments, the wireless access network is not available to the device for some other reason. In some embodiments, after the device is turned on, the activation agent is configured to automatically seek a connection with the wireless access network, and if the wireless access network is available and the device is permitted to communicate over the wireless access network, then the device communicates with an activation server over the wireless access network, the communication comprising registering the device with the activation server and assisting in implementing an activation sequence to obtain a set of service plan policy capabilities for the device. If the wireless access network is unavailable or if the device is not permitted to communicate with the wireless access network, then the activation agent detects the condition that the device cannot communicate with the activation server over the wireless access network.

In some embodiments, when the activation agent detects the condition that the device cannot communicate with the activation server over the wireless access network, the activation agent automatically causes an alternative activation message to be presented through the device UI. In some embodiments, the alternative activation message comprises information instructing the device user to connect the device to a WiFi network so that service on the wireless access network can be initiated. In some embodiments, when the activation agent detects the condition that the device cannot communicate with the activation server over the wireless access network the activation agent automatically detects the status of a device WiFi connection and, when the device connects to a WiFi network, the activation agent seeks to communicate with the activation server, or an alternative activation element, via the WiFi network. In some embodiments, when the activation agent reaches the activation server or an alternative activation element via the WiFi network, then the device activation agent communicates with the activation server, or an alternative activation element, registers a device credential and assists in the service plan selection sequence. In some embodiments, when the device cannot connect to a WiFi network, the alternative activation message comprises information instructing the device user to call customer care to complete the activation. In some embodiments, when the device cannot connect to a WiFi network, the alternative activation message comprises information instructing the end user to use an alternative device to navigate to a web site to complete the activation.

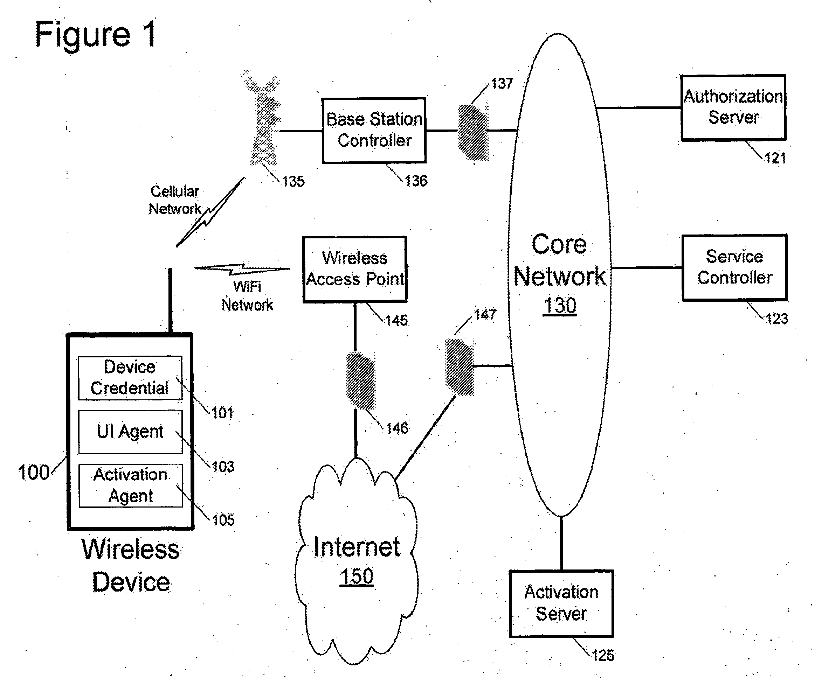

Figure 1 illustrates an embodiment of a wireless device 100 having a Device Credential 101, user-interface (UI) Agent 103, and Activation Agent 105 capable of communicating with an Authorization Server element 121, Service Controller element 123, and Activation Server element 125 on a Core Network 130 over two different wireless access networks. In the example shown, the two wireless access networks include a cellular network (including a base station 135 and base station controller 136) and a WiFi network (including a wireless access point 145). Base station controller 136 is coupled to core network 130 via a firewall 137 in this example, while wireless access point (WAP) 145 is coupled to core network 130 via the Internet (150), with firewalls 146 and 147 disposed between the WAP-side and network-side Internet connections.

In some embodiments, wireless device 100 is a smartphone, an embedded module, a PC dongle, a feature phone.

In some embodiments, device credential 101 is an IMSI, an MSISDN, an MDN, a MIN, an ESN, an MEID, an IMEI, a MAC address, an IP address, a shared secret, a username, a password, a Network Access Identifier (NAI), an electronic serial number, or any other identifier that uniquely identifies the device. In some embodiments, the device credential is stored in wireless device 100 (e.g., in a non-volatile memory of the wireless device). In some embodiments, the device credential is stored on a SIM (Subscriber Identity Module) card associated with the wireless device. In some embodiments, device credential 101 is implemented by a combination of a credential stored within a memory of wireless device 100 and a credential on the associated SIM card. In some embodiments, the device credential is transmitted to authorization server 121 in the network over a traffic channel via a secure link. In some embodiments, the device credential is transmitted to the authorization server in the network over a control or signaling link. In some embodiments, the device credential is transmitted to the authorization server in the network over a combination of a signaling link and a traffic link. In some embodiments, the device credential is used by wireless device 100 to gain access to the network. In some embodiments, the device credential is used by the device to gain access to certain services provided by the network (e.g., access to the service controller, access to the activation server, access to certain content on the Internet, etc.). In some embodiments, the device credential can be updated by interacting with a user of wireless device (the "end user" or wireless device user) via UI agent 103. In some embodiments, the device credential can be updated automatically over the air.

In some embodiments, UI agent 103 on the wireless device comprises a web browser, an application, a service, an agent, or another entity on the device that enables the wireless device user to interact with the device. In some embodiments, the UI agent presents (e.g., displays) messages received from the network. In some embodiments, the UI agent presents messages that are stored locally on the wireless device. In some embodiments, the UI agent presents messages that are a combination of information received from the network and locally stored information.

In some embodiments, activation agent 105 comprises an application, a service, a web browser, or another entity on the wireless device the enables the device to interact with activation server 125 in the network for the purpose of enabling the device user to select a user service plan on the device.

In some embodiments, activation server 125 is incorporated into an HLR, an HSS, an SGSN, a GGSN, a PDSN, a Home Agent, a Foreign Agent, a AAA server, a web server, or another authorization element operated by the wireless access network provider, a partner of the wireless access network provider (e.g., retail partner, OEM partner, etc.), or an MVNO (mobile virtual network operator) of the wireless access network provider.

In some embodiments, device credential 101 is used by authorization server 121 to determine if the wireless device is authorized to gain access to the wireless network. In some embodiments, the device credential is used by the authorization server to determine if the device is authorized to access the requested network service. In some embodiments, the device credential is used by the authorization server to detect if the device requires a user service plan. In some embodiments, if the device requires a user service plan, the authorization server redirects the device traffic to the activation server.

In some embodiments, activation server 125 comprises a web server, a network application, or another entity that interacts with the activation agent on the device to enable the device user to select a user service plan. In some embodiments, the process of selecting a user service plan includes entering payment information (e.g., credit card, debit card, automatic bank transfer, prepaid voucher, etc:). In some embodiments, the process of selecting a user service plan includes accepting the user service plan terms and conditions. In some embodiments, the process of selecting a user service plan includes accepting the option to allow the wireless service provider to automatically charge the device user for the user service plan or when the user service plan rolls over. In some embodiments, the process of selecting a user service plan includes provisioning the network elements responsible for enforcing user service plan policy. In some embodiments, the process or selecting a user service plan includes accepting an option to allow the wireless service provider to automatically charge the device user for costs associated with an overage condition (e.g., roaming, usage outside of a service plan or policy, etc.).

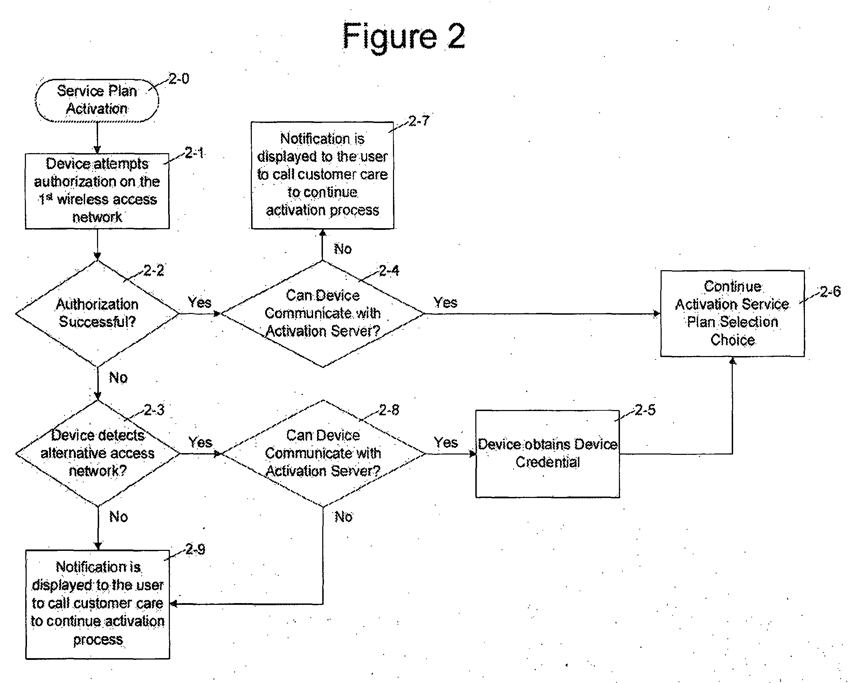

Figure 2 is a flow diagram illustrating an example of a process of selecting an activation service plan selection in accordance with some embodiments, including an embodiment according Figure 1. At step 2-0, the process begins. At step 2-1, upon wireless device power-up, the wireless device attempts to connect to the wireless access network operated by the wireless service provider. During the connection process, the wireless device provides a credential to the network to determine its eligibility to connect to the wireless network and access services via the wireless network. At step 2-2, the wireless device checks the status of the authorization request. If the authorization request was successful, then at step 2-4 the wireless device attempts to communicate with an activation server over the first wireless access network (e.g., the cellular network shown in Figure 1). If the wireless device can communicate with the activation server over the first wireless access network, at step 2-6 an activation agent on the wireless device interacts with the activation server to enable the wireless device user to select an activation user service plan over the first wireless access network. If the wireless device is unable to communicate with the activation server over the first wireless access network, then at step 2-7 a UI agent on the wireless device presents a notification to the wireless-device user to contact customer care to continue the activation process.

If, at step 2-2, the authorization request was denied, then at step 2-3 the wireless device checks to see if there is an alternative network to connect to (e.g., WiFi network as shown in Figure 1, LAN, etc.). If the wireless device detects an alternative network, then at step 2-8 the wireless device attempts to communicate with the activation server over the alternative network. If the wireless device can communicate with the activation server over the alternative network, then at step 2-5 the wireless device obtains a new device credential from the activation server. After the device receives its new device credential from the activation server, at step 2-6, the activation agent on the wireless device interacts with the activation server to enable the device user to select an activation user service plan over the alternative network. If, at step 2-3, the wireless device does not detect an alternative access network, then at step 2-9 the UI agent on the device presents a notification to the device user to contact customer care to continue the activation process.

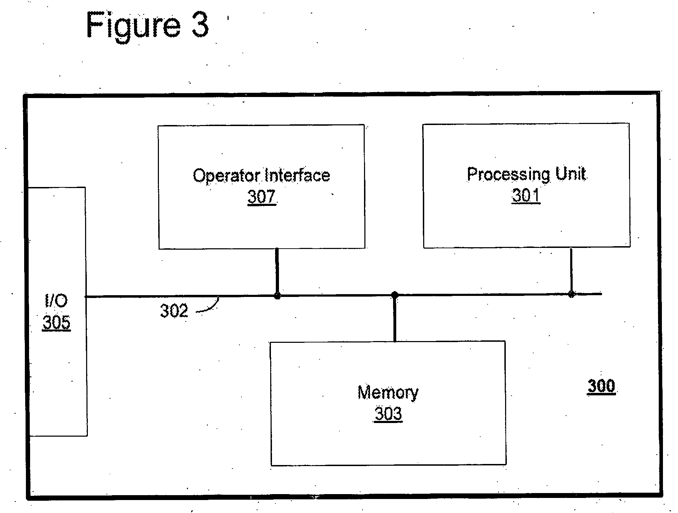

Figure 3 illustrates a generalized embodiment of a computing device 300 that may be used to implement the wireless device, various network elements (e.g., authentication servers, activation servers, etc.) and any other entity or device in which the operations described above may be executed. As shown, computing device 300 includes a processing unit 301, memory 303 for storing program code executed by the processing unit to effect the various methods and techniques of the above-described embodiments, and also to configuration data or other information for effecting various programmed or configuration settings in accordance with the embodiments described above. Note that the processing unit itself may be implemented by one or more general-purpose or special-purpose processors (or sets of processing cores) and thus may execute sequences of programmed instructions to effectuate the various operations associated with wireless device authentication and service activation, as well as interaction with a user, system operator or other system components.

Still referring to Figure 3, computing device 300 further includes one or more input and/or output (I/O) ports 305 for receiving and outputting data (e.g., various wireless communications interfaces in accordance with communications standards described above), and a user interface 307 to present (display) and receive information to a human or artificial operator and thus enable an operator to provide input in connection with the above-described authentication and activation operations. Though not shown, numerous other or more specific functional blocks may be provided within computing device 300 according to other functions it may be required to perform (e.g., one or more modems to support cellular, WiFi or other wireless or wired access) and, particularly in the case of a network element, the computing device itself may be a component in a larger device, server or network of devices and/or servers. Further, the functional blocks within computing device 300 are depicted as being coupled by a communication path 302 which may include any number of shared or dedicated buses or signaling links. More generally, the functional blocks shown may be interconnected in a variety of different topologies and individually implemented by a variety of different underlying technologies and architectures. With regard to the memory architecture, for example, multiple different classes of storage may be provided within memory 303 to store different classes of data. For example, memory 303 may include non-volatile storage media such as fixed or removable magnetic, optical, or semiconductor-based recording media (e.g., to store executable code and related data, wireless device credential(s), end-user credential(s), etc.), and volatile storage media such as static or dynamic RAM to store more transient information and other variable data.

The various methods and techniques disclosed herein may be implemented through execution of one or more a sequences of instructions (i.e., software program(s)) within processing unit 301, or by a custom-built hardware ASIC (application-specific integrated circuit), or programmed on a programmable hardware device such as an FPGA (field-programmable gate array), or any combination thereof within or external to processing unit 301.

Any of the various methodologies disclosed herein and/or user interfaces for configuring and managing same may be implemented by machine execution of one or more sequences of instructions (including related data necessary for proper instruction execution). Such instructions may be recorded on one or more computer-readable media for later retrieval and execution within one or more processors of a special purpose or general purpose computer system or consumer electronic device or appliance, such as the system, device or appliance described in reference to Figure 3. Computer-readable media in which such instruction and data may be embodied include, but are not limited to, non-volatile storage media in various non-transitory forms (e.g., optical, magnetic or semiconductor storage media) and carrier waves that may be used to transfer such instructions and data through wireless, optical, or wired signaling media or any combination thereof. Examples of transfers of such instructions and data by carrier waves include, but are not limited to, transfers (uploads, downloads, e-mail, etc.) over the Internet and/or other computer networks via one or more data transfer protocols (e.g., HTTP, FTP, SMTP, etc.).

Various modifications and changes may be made to the specific embodiments disclosed herein without departing from the broader disclosure. For example, features or aspects of any of the embodiments may be applied in combination with any other of the embodiments or in place of counterpart features or aspects thereof. The terms "exemplary" and "embodiment" are used to express an example, not a preference or requirement. Also, the terms "may" and "can" are used interchangeably to denote optional (permissible) subject matter. The absence of either term should not be construed as meaning that a given feature or technique is required. Further, in the foregoing description and in the accompanying drawings, specific terminology and drawing symbols have been set forth to provide a thorough understanding of the disclosed embodiments. In some instances, the terminology and symbols may imply implementation or operational details that are not required to practice those embodiments. Accordingly, the specification and drawings are to be regarded in an illustrative rather than a restrictive sense.

## Claims

1. A method performed by a wireless device (100), the method comprising:
sending a message to a network element (121, 123, 125) over a first wireless access network, the message including a first device credential, the message configured to obtain information to assist in presenting an on-device user service plan selection choice through a user interface of the wireless device (100);
determining that the wireless device (100) is not authorized to connect to the network element (121, 123, 125) over the first wireless access network; and
in response to determining that the wireless device (100) is not authorized to connect to the network element (121, 123, 125) over the first wireless access network, attempting to connect to the network element (121, 123, 125) over a second data access network.

2. The method recited in claim 1, further comprising:
connecting to the network element over the second data access network;
receiving a second device credential from the network element; obtaining the on-device user service plan selection choice; and
presenting the on-device user service plan selection choice through the user interface.

3. The method recited in claim 1, further comprising determining that attempting to connect to the network element over the second data access network has failed and, in response, prompting a user to obtain a valid device credential through another process.

4. The method recited in claim 3, wherein prompting the user comprises presenting a notification through the user interface instructing a user of the wireless device to contact customer care.

5. The method recited in claim 3, wherein prompting the user comprises presenting a notification through the user interface directing a user of the wireless device to a web site.

6. The method recited in claim 1, further comprising:
presenting a notification through the user interface, and
configuring a setting to enable said attempting to connect to the network element over the second data access network.

7. The method recited in claim 1, wherein the first device credential is provisioned on the network element.

8. The method recited in claim 1, further comprising obtaining a second device credential to assist the wireless device in connecting to the first wireless access network.

9. The method recited in claim 8, wherein obtaining the second device credential comprises receiving the second device credential over the air or obtaining the second device credential through the user interface.

10. The method recited in claim 8, wherein the second device credential is provisioned on the network element.

11. The method recited in claim 1, wherein the first wireless access network is a cellular network and the second data access network is a WiFi network or a local area network (LAN).

12. The method recited in claim 1, further comprising assisting in authenticating the wireless device.

13. The method recited in claim 1, wherein the network element comprises one or more of a home location register (HLR), a home subscriber server ,HSS, a serving GPRS support node ,SGSN, a gateway GPRS support node GGSN, a packet data serving node ,PDSN, a home agent, a foreign agent, or an authentication, authorization, and accounting ,AAA, server.

14. The method recited in claim 1 , wherein the first device credential comprises one or more of an international mobile subscriber identity ,IMSI, a mobile station international subscriber directory number ,MSISDN, a mobile directory number ,MDN, a mobile identification number ,MIN, an electronic serial number ,ESN, a mobile equipment identifier ,MEID, an international mobile equipment identity ,IMEI, a media access control ,MAC, address, an IP address, a shared secret, a username, a password, or a network access identifier ,NAI,.

15. The method recited in claim 1, further comprising presenting the on-device user service plan selection choice through the user interface.

16. The method recited in claim 15, wherein at least a portion of the on-device user service plan selection choice is stored on the wireless device and/or at least a portion of the on-device user service plan selection choice is stored on the network element.

17. The method recited in claim 15, further comprising:
obtaining, through the user interface, a user selection or payment information in response to the on-device user service plan selection choice; and
sending the user selection or payment information to the network element.

18. A wireless device (100) comprising:
one or more modems enabling the wireless device (100) to connect to at least a first wireless access network and a second data access network;
a user interface; and computing circuitry, including one or more processors and memory to store
program code which, when executed by the one or more processors, causes the one or more processors to:
send a message to a network element (121, 123, 125) over the first wireless,access network using the first modem, the message including a first device credential, the message configured to obtain information to assist in presenting an on-device user service plan selection choice via the user interface; determine that the wireless device (100) is not authorized to communicate with the network access element (121, 123, 125) over the first wireless network; and
in response to determining that the wireless device (100) is not authorized to
communicate with the network element (121, 123, 125) over the first wireless access network, attempt to connect to the network element over the second data access network.

19. A non-transitory computer-readable storage medium to store program code that, when
executed by one or more processors, causes the one or more processors to: send a message to a network element (121, 123, 125) over a first wireless access network, the message including a first device credential, the message configured to obtain information to assist in presenting an on-device user service plan selection choice via the user interface;
determine that the wireless device (100) is not authorized to connect to the network element (121, 123, 125) over the first wireless network; and
in response to determining that.the wireless device (100) is not authorized to connect to the network element (121, 123, 125) over the first wireless access network, attempt to connect to the network element over a second data access network.

## Patentansprüche

1. Verfahren, das von einer kabellosen Vorrichtung (100) ausgeführt wird, wobei das Verfahren umfasst:
Senden einer Nachricht an ein Netzelement (121, 123, 125) über ein erstes kabelloses Zugangsnetz, wobei die Nachricht erste Vorrichtung-Zugangsdaten beinhaltet, wobei die Nachricht konfiguriert ist, Informationen zu erhalten, um bei der Darstellung einer auf der Vorrichtung ausgeführten Benutzerdienstplan-Angebotsauswahl durch eine Benutzerschnittstelle der kabellosen Vorrichtung (100) zu assistieren;
Bestimmen, dass die kabellose Vorrichtung (100) nicht autorisiert ist, sich mit dem Netzelement (121, 123, 125) über das erste kabellose Zugangsnetz zu verbinden; und
in Reaktion auf die Feststellung, dass die kabellose Vorrichtung (100) nicht autorisiert ist, sich mit dem Netzelement (121, 123, 125) über das erste kabellose Zugangsnetz zu verbinden, Versuchen, sich mit dem Netzelement (121, 123, 125) über ein zweites kabelloses Zugangsnetz zu verbinden.

2. Verfahren gemäß Anspruch 1, ferner umfassend:
Verbinden mit dem Netzelement über das zweite Daten-Zugangsnetz;
Empfangen zweiter Vorrichtung-Zugangsdaten von dem Netzelement;
Beziehen der auf der Vorrichtung ausgeführten Benutzerdienstplan-Angebotsauswahl; und
Darstellen der auf der Vorrichtung ausgeführten Benutzerdienstplan-Angebotsauswahl durch die Benutzerschnittstelle.

3. Verfahren gemäß Anspruch 1, ferner umfassend Bestimmen, dass der Versuch, sich mit dem Netzelement über das zweite kabellose Zugangsnetz zu verbinden, fehlgeschlagen ist, und, in Reaktion darauf, Auffordern eines Benutzers, gültige Vorrichtung-Zugangsdaten über einen anderen Vorgang zu beziehen.

4. Verfahren gemäß Anspruch 3, wobei Auffordern des Benutzers Darstellen einer Benachrichtigung durch die Benutzerschnittstelle umfasst, die einen Benutzer der kabellosen Vorrichtung anweist, die Kundenbetreuung zu kontaktieren.

5. Verfahren gemäß Anspruch 3, wobei Auffordern des Benutzers Darstellen einer Benachrichtigung durch die Benutzerschnittstelle umfasst, die den Benutzer der kabellosen Vorrichtung auf eine Internetseite leitet.

6. Verfahren gemäß Anspruch 1, ferner umfassend:
Darstellen einer Benachrichtigung durch die Benutzerschnittstelle, und Konfigurieren einer Einstellung, um den Versuch, sich mit dem Netzelement über das zweite kabellose Zugangsnetz zu verbinden, zu erlauben.

7. Verfahren gemäß Anspruch 1, wobei die ersten Vorrichtungs-Zugangsdaten auf dem Netzelement vorgehalten werden.

8. Verfahren gemäß Anspruch 1, ferner umfassend Erhalten zweiter Vorrichtungs-Zugangsdaten, um die kabellose Vorrichtung beim Verbinden mit dem ersten kabellosen Zugangsnetz zu unterstützen.

9. Verfahren gemäß Anspruch 8, wobei Erhalten der zweiten Vorrichtungs-Zugangsdaten Empfangen der zweiten Vorrichtungs-Zugangsdaten über die Luft oder Erhalten der zweiten Vorrichtungs-Zugangsdaten über die Benutzerschnittstelle umfasst.

10. Verfahren gemäß Anspruch 8, wobei die zweiten Vorrichtungs-Zugangsdaten auf dem Netzelement vorgehalten werden.

11. Verfahren gemäß Anspruch 1, wobei das erste kabellose Zugangsnetz ein Mobilfunknetzwerk ist, und wobei das zweite kabellose Zugangsnetz ein WiFi-Netz oder ein lokales Nahbereichsnetz, LAN, ist.

12. Verfahren gemäß Anspruch 1, außerdem umfassend Assistieren beim Authentifizieren der kabellosen Vorrichtung.

13. Verfahren gemäß Anspruch 1, wobei das Netzelement eines oder mehrere umfasst aus einem Heimatortsregister, HLR, ein zentraler Teilnehmer-Server, HSS, ein GPRS Vermittlungsunterstützungsknoten, SGSN, ein GPRS Netzkopplungsunterstützungsknoten, GGSN, ein Paketdatenvermittlungsknoten, PDSN, ein Heimatmittel, ein Fremdmittel, oder ein Authentifizierungs-, Authorisierungs- und Abrechnungsserver, AAA.

14. Verfahren gemäß Anspruch 1, wobei die ersten Vorrichtungs-Zugangsdaten eines oder mehrere umfasst aus einer internationalen Mobilfunkteilnehmerkennung, IMSI, eine internationale Mobilfunkstationsteilnehmerverzeichnisnummer MSISDN, Mobilfunkverzeichnisnummer, MDN, , eine Mobilfunkidentifikationsnummer, MIN, eine elektronische Seriennummer, ESN, eine Mobilfunkequipmentkennung, MEID, eine internationale Mobilfunkequipmentkennung, IMEI, eine Medienzugangssteuer, MAC, Adresse, eine IP Adresse, ein geteiltes Geheimnis, ein Benutzername, ein Passwort oder eine Netzzugangskennung, NAI.

15. Verfahren gemäß Anspruch 1, ferner umfassend Darstellen der auf der Vorrichtung ausgeführten Benutzerdienstplan-Angebotsauswahl über die Benutzerschnittstelle.

16. Verfahren gemäß Anspruch 15, wobei zumindest ein Teil der auf der Vorrichtung ausgeführten Benutzerdienstplan-Angebotsauswahl auf der kabellosen Vorrichtung gespeichert ist und/oder zumindest ein Teil der auf der Vorrichtung ausgeführten Benutzerdienstplan-Angebotsauswahl auf dem Netzelement gespeichert ist.

17. Verfahren gemäß Anspruch 15, ferner umfassend:
Beziehen, über die Benutzerschnittstelle, einer Benutzerauswahl oder von Bezahlinformationen in Reaktion auf die auf der Vorrichtung ausgeführte Benutzerdienstplan-Angebotsauswahl; und
Senden der Benutzer-Auswahl oder Bezahlinformationen an das Netzelement.

18. Kabellose Vorrichtung (100) umfassend:
eines oder mehrere Modems, die es der kabellosen Vorrichtung (100) erlauben, sich mit zumindest einem ersten kabellosen Zugangsnetz und einem zweiten kabellosen Zugangsnetz zu verbinden;
eine Benutzerschnittstelle; und Rechenschaltungen, die einen oder mehrere Prozessoren und Speicher zum Speichern von Programmcode beinhalten, der, wenn er von dem einen oder den mehreren Prozessoren ausgeführt wird, die einen oder mehreren Prozessoren veranlasst zum:
Senden einer Nachricht an ein Netzelement (121, 123, 125) über ein erstes kabelloses Zugangsnetz unter Verwendung des ersten Modems, wobei die Nachricht konfiguriert ist, Informationen zu erhalten, um bei der Darstellung einer auf der Vorrichtung ausgeführten Benutzerdienstplan-Angebotsauswahl durch eine Benutzerschnittstelle der kabellosen Vorrichtung (100) zu assistieren;
Bestimmen, dass die kabellose Vorrichtung (100) nicht autorisiert ist, sich mit dem Netzelement (121, 123, 125) über das erste kabellose Zugangsnetz zu verbinden; und
in Reaktion auf die Feststellung, dass die kabellose Vorrichtung (100) nicht autorisiert ist, sich mit dem Netzelement (121, 123, 125) über das erste kabellose Zugangsnetz zu verbinden, Versuchen, sich mit dem Netzelement über das zweite kabelloseZugangsnetz zu verbinden.

19. Nichtflüchtiges computerlesbares Speichermedium zum Speichern von Programmcode, der, wenn er von einem oder mehreren Prozessoren ausgeführt wird, die einen oder mehreren Prozessoren veranlasst zum:
Senden einer Nachricht an ein Netzelement (121, 123, 125) über ein erstes kabelloses Zugangsnetz unter Verwendung des ersten Modems, wobei die Nachricht konfiguriert ist, Informationen zu erhalten, um bei der Darstellung einer auf der Vorrichtung ausgeführten Benutzerdienstplan-Angebotsauswahl durch eine Benutzerschnittstelle der kabellosen Vorrichtung (100) zu assistieren;
Bestimmen, dass die kabellose Vorrichtung (100) nicht autorisiert ist, sich mit dem Netzelement (121, 123, 125) über das erste kabellose Zugangsnetz zu verbinden; und
in Reaktion auf die Feststellung, dass die kabellose Vorrichtung (100) nicht autorisiert ist, sich mit dem Netzelement (121, 123, 125) über das erste kabellose Zugangsnetz zu verbinden, Versuchen, sich mit dem Netzelement über das zweite kabellose Zugangsnetz zu verbinden.

## Revendications

1. Procédé effectué par un dispositif sans fil (100), le procédé comprenant :
l'envoi d'un message à un élément de réseau (121, 123, 125) par le biais d'un premier réseau d'accès sans fil, le message comportant un premier justificatif d'identité de dispositif, le message étant configuré pour obtenir des informations pour assister la présentation d'un choix de sélection d'un plan de service d'utilisateur sur un dispositif par le biais d'une interface utilisateur du dispositif sans fil (100) ;
la détermination que le dispositif sans fil (100) n'est pas autorisé à se connecter à l'élément de réseau (121, 123, 125) par le biais d'un premier réseau d'accès sans fil ; et
en réponse à la détermination que le dispositif sans fil (100) n'est pas autorisé à se connecter à l'élément de réseau (121, 123, 125) par le biais du premier réseau d'accès sans fil, l'essai de connexion à l'élément de réseau (121, 123, 125) par le biais d'un second réseau d'accès de données.

2. Procédé selon la revendication 1, comprenant en outre :
la connexion à l'élément de réseau par le biais du second réseau d'accès de données ;
la réception d'un second justificatif d'identité de dispositif en provenance de l'élément de réseau ;
l'obtention du choix de sélection d'un plan de service d'utilisateur sur un dispositif ; et
la présentation du choix de sélection d'un plan de service d'utilisateur sur un dispositif par le biais de l'interface utilisateur.

3. Procédé selon la revendication 1, comprenant en outre la détermination que l'essai de connexion à l'élément de réseau par le biais du second réseau d'accès de données a échoué et, en réponse, la demande à un utilisateur d'obtenir un justificatif d'identité de dispositif valide par le biais d'un autre processus.

4. Procédé selon la revendication 3, dans lequel la demande à l'utilisateur comprend la présentation d'une notification par le biais de l'interface utilisateur ordonnant à un utilisateur du dispositif sans fil de contacter un service d'assistance à la clientèle.

5. Procédé selon la revendication 3, dans lequel la demande à l'utilisateur comprend la présentation d'une notification par le biais de l'interface utilisateur dirigeant un utilisateur du dispositif sans fil vers un site Web.

6. Procédé selon la revendication 1, comprenant en outre :
la présentation d'une notification par le biais de l'interface utilisateur, et
la configuration d'un réglage pour permettre ledit essai de connexion à l'élément de réseau par le biais du second réseau d'accès de données.

7. Procédé selon la revendication 1, dans lequel le premier justificatif d'identité de dispositif est approvisionné dans l'élément de réseau.

8. Procédé selon la revendication 1, comprenant en outre l'obtention d'un second justificatif d'identité de dispositif pour assister le dispositif sans fil pour la connexion au premier réseau d'accès sans fil.

9. Procédé selon la revendication 8, dans lequel l'obtention du second justificatif d'identité de dispositif comprend la réception du second justificatif d'identité de dispositif par une liaison radio ou l'obtention du second justificatif d'identité de dispositif par le biais de l'interface utilisateur.

10. Procédé selon la revendication 8, dans lequel le second justificatif d'identité de dispositif est approvisionné dans l'élément de réseau.

11. Procédé selon la revendication 1, dans lequel le premier réseau d'accès sans fil est un réseau cellulaire et le second réseau d'accès de données est un réseau WiFi ou un réseau local, LAN.

12. Procédé selon la revendication 1, comprenant en outre l'assistance pour l'authentification du dispositif sans fil.

13. Procédé selon la revendication 1, dans lequel l'élément de réseau comprend un ou plusieurs d'un registre des positions de rattachement (HLR), d'un serveur d'abonné résidentiel ,HSS, d'un noeud de support du service GPRS de desserte ,SGSN, d'un noeud de support GPRS de transit GGSN, d'un noeud de desserte de données par paquets ,PDSN, d'un agent domestique, d'un agent étranger ou d'un serveur d'authentification, d'autorisation et de comptabilité ,AAA,.

14. Procédé selon la revendication 1, dans lequel le premier justificatif d'identité de dispositif comprend un ou plusieurs d'une identité internationale d'abonné mobile ,IMSI, d'un numéro RNIS de station mobile ,MSISDN, d'un numéro d'annuaire mobile ,MDN, d'un numéro d'identification mobile ,MIN, d'un numéro de série électronique ,ESN, d'un identifiant d'équipement mobile ,MEID, d'une identité internationale d'équipement mobile ,IMEI, d'une adresse de contrôle d'accès au support physique ,MAC, d'une adresse IP, d'un secret partagé, d'un nom d'utilisateur, d'un mot de passe ou d'un identifiant d'accès à un réseau ,NAI,.

15. Procédé selon la revendication 1, comprenant en outre la présentation du choix de sélection d'un plan de service d'utilisateur sur un dispositif par le biais de l'interface utilisateur.

16. Procédé selon la revendication 15, dans lequel au moins une partie du choix de sélection d'un plan de service d'utilisateur sur un dispositif est stockée dans le dispositif sans fil et/ou au moins une partie du choix de sélection d'un plan de service d'utilisateur sur un dispositif est stockée dans l'élément de réseau.

17. Procédé selon la revendication 15, comprenant en outre :
l'obtention, par le biais de l'interface utilisateur, d'une sélection d'utilisateur ou d'informations de paiement en réponse au choix de sélection d'un plan de service d'utilisateur sur un dispositif ; et
l'envoi de la sélection d'utilisateur ou des informations de paiement à l'élément de réseau.

18. Dispositif sans fil (100) comprenant :
un ou plusieurs modems permettant au dispositif sans fil (100) de se connecter à au moins un premier réseau d'accès sans fil et un second réseau d'accès de données ;
une interface utilisateur ; et
des circuits informatiques, comportant un ou plusieurs processeurs et une mémoire pour stocker un code de programme, qui, lorsqu'il est exécuté par le ou les processeurs, amène le ou les processeurs à :
envoyer un message à un élément de réseau (121, 123, 125) par le biais du premier réseau d'accès sans fil à l'aide du premier modem, le message comportant un premier justificatif d'identité de dispositif, le message étant configuré pour obtenir des informations pour assister la présentation d'un choix de sélection d'un plan de service d'utilisateur sur un dispositif via l'interface utilisateur ;
déterminer que le dispositif sans fil (100) n'est pas autorisé à communiquer avec l'élément de réseau (121, 123, 125) par le biais du premier réseau sans fil ; et
en réponse à la détermination que le dispositif sans fil (100) n'est pas autorisé à communiquer avec l'élément de réseau (121, 123, 125) par le biais du premier réseau d'accès sans fil, essayer une connexion à l'élément de réseau par le biais du second réseau d'accès de données.

19. Support de stockage non transitoire, lisible par ordinateur pour stocker un code de programme qui, lorsqu'il est exécuté par un ou plusieurs processeurs, amène le ou les processeurs à :
envoyer un message à un élément de réseau (121, 123, 125) par le biais d'un premier réseau d'accès sans fil, le message comportant un premier justificatif d'identité de dispositif, le message étant configuré pour obtenir des informations pour assister la présentation d'un choix de sélection d'un plan de service d'utilisateur sur un dispositif via l'interface utilisateur ;
déterminer que le dispositif sans fil (100) n'est pas autorisé à se connecter à l'élément de réseau (121, 123, 125) par le biais du premier réseau sans fil ; i et
en réponse à la détermination que le dispositif sans fil (100) n'est pas autorisé à se connecter à l'élément de réseau (121, 123, 125) par le biais du premier réseau d'accès sans fil, essayer une connexion à l'élément de réseau par le biais d'un second réseau d'accès de données.
